(19) Europäisches Patentamt
European Patent Office
Office européen des brevets

(11) **EP 4 456 477 A1**

(12) **DEMANDE DE BREVET EUROPEEN**

(43) Date de publication:
**30.10.2024 Bulletin 2024/44**

(51) Classification Internationale des Brevets (IPC):
**H04L 9/30** *(2006.01)*  **H04L 9/32** *(2006.01)*

(21) Numéro de dépôt: **24168685.6**

(52) Classification Coopérative des Brevets (CPC):
**H04L 9/3073; H04L 9/3231;** H04L 2209/046

(22) Date de dépôt: **05.04.2024**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **25.04.2023 FR 2304129**

(71) Demandeur: **IDEMIA Identity & Security France 92400 Courbevoie (FR)**

(72) Inventeurs:
• **CHABANNE, Hervé 92400 COURBEVOIE (FR)**
• **IBARRONDO, Alberto 92400 Courbevoie (FR)**

(74) Mandataire: **Idemia
2, place Samuel de Champlain
92400 Courbevoie (FR)**

(54) **PROCÉDÉ DE TRAITEMENT DE DONNÉES BIOMÉTRIQUES, SYSTÈME ET PROGRAMME D'ORDINATEUR ASSOCIÉS**

(57)   Procédé de traitement de données biométriques comprenant :
- Le chiffrement fonctionnel (E104) d'une donnée biométrique d'épreuve qui est un vecteur comprenant n composantes d'épreuve représentatives d'un trait biométrique d'un individu candidat, et au moins une autre composante d'épreuve non nulle représentative d'un premier élément de masquage,
- L'obtention d'un score (E106) représentant une distance, entre la donnée biométrique d'épreuve et une donnée biométrique de référence, sous une forme masquée par un masque primaire, par déchiffrement fonctionnel de la donnée biométrique d'épreuve chiffrée, en utilisant une clé de déchiffrement fonctionnel pour une fonction polynomiale de degré 1 ou 2 paramétrée avec ladite donnée biométrique de référence, la donnée biométrique de référence étant un autre vecteur comprenant n composantes de référence représentatives d'un trait biométrique d'un individu de référence et au moins une autre composante de référence non nulle représentative d'un deuxième élément de masquage.

[Fig 2]

EP 4 456 477 A1

Processed by Luminess, 75001 PARIS (FR)

## Description

L'invention concerne un procédé de traitement de données biométriques, pour la comparaison entre une donnée biométrique d'épreuve et au moins une donnée biométrique de référence.

On connaît déjà des schémas d'identification ou d'authentification dans lesquels un utilisateur, aussi dénommé individu candidat, présente à une unité de traitement digne de confiance, par exemple à une unité appartenant à une douane, un aéroport, etc., une donnée biométrique fraîchement acquise sur l'utilisateur que l'unité confronte à une ou plusieurs donnée(s) biométrique(s) de référence enregistrée(s) dans une base de données de référence à laquelle elle a accès.

Cette base de données de référence regroupe les données biométriques de référence des individus autorisés, aussi dénommés individus de référence, tels que les passagers d'un vol avant l'embarquement.

On connaît de la demande FR3123130A1, un procédé de traitement de données biométriques destiné à être utilisé pour identifier ou authentifier un individu candidat, et basé sur un mécanisme astucieux à base d'un algorithme cryptographique de chiffrement fonctionnel.

L'algorithme cryptographique de chiffrement fonctionnel peut être tel que décrit dans « Function-Hiding Inner Product Encryption is Practical », Sam Kim, Kevin Lewi, Avradip Mandal, Hart Montgomery, Arnab Roy, and David J. Wu SCN 2018: 544-562.

Pour chaque donnée biométrique de référence, une clé privée de déchiffrement fonctionnel est générée, de sorte à constituer une base de clés privées de déchiffrement fonctionnel.

Une donnée biométrique d'épreuve représentative d'un trait biométrique de l'individu candidat est chiffrée en utilisant une clé publique de chiffrement fonctionnel.

Pour calculer une distance entre la donnée biométrique d'épreuve et une donnée biométrique de référence, on déchiffre par déchiffrement fonctionnel la donnée biométrique d'épreuve chiffrée en utilisant la clé privée de déchiffrement fonctionnel générée à partir de la donnée biométrique de référence.

Ainsi, on peut se contenter d'une base de données de référence contenant des clés privées de déchiffrement, chacune associée à une donnée biométrique de référence (il n'est pas nécessaire de garder la donnée biométrique de référence), mais ne permettant pas de remonter à cette donnée biométrique de référence.

Cela est par ailleurs très avantageux en termes de taille de stockage des données.

Une telle solution apporte satisfaction, mais les distances calculées entre une donnée biométrique de référence et plusieurs données biométriques d'épreuve, peuvent fuiter de l'information concernant la donnée biométrique de référence.

Pour limiter la quantité d'information susceptible de fuiter, on restreint le nombre de déchiffrements fonctionnels exécutables en utilisant une même clé privée de déchiffrement fonctionnel.

Cette restriction limite le nombre d'identification ou d'authentification réalisable avec une base de données de référence.

Il serait ainsi souhaitable de disposer d'une solution simple, fiable, sécurisée, respectueuse de la vie privée et qui remédie à cet inconvénient pour l'identification et/ou l'authentification d'un individu.

A cet effet, la présente invention propose selon un premier aspect, un procédé de traitement de données biométriques, le procédé comprenant la mise en oeuvre par un système d'étapes de :

- Chiffrement fonctionnel d'une donnée biométrique d'épreuve en utilisant une clé de chiffrement fonctionnel,
- Pour au moins une donnée biométrique de référence, obtention d'un score représentant une distance entre la donnée biométrique d'épreuve et la donnée biométrique de référence, par déchiffrement fonctionnel de la donnée biométrique d'épreuve chiffrée, en utilisant une clé de déchiffrement fonctionnel pour une fonction polynomiale de degré 1 ou 2 paramétrée avec ladite donnée biométrique de référence,

le procédé étant caractérisé en ce que :

- La donnée biométrique d'épreuve est un vecteur comprenant n composantes d'épreuve représentatives d'un trait biométrique d'un individu candidat, avec n un entier naturel strictement supérieur à zéro, et au moins une autre composante d'épreuve non nulle représentative d'un premier élément de masquage,
- La donnée biométrique de référence est un autre vecteur comprenant n composantes de référence représentatives d'un trait biométrique d'un individu de référence et au moins une autre composante de référence non nulle représentative d'un deuxième élément de masquage, et
- Le score obtenu par déchiffrement fonctionnel, représente la distance entre la donnée biométrique d'épreuve et la donnée biométrique de référence sous une forme masquée par un masque primaire.

Selon des caractéristiques avantageuses et non-limitatives :

- le masque primaire a pour valeur le résultat de l'application à l'au moins une autre composante d'épreuve de la fonction polynomiale de degré 1 ou 2 paramétrée avec l'au moins une autre composante de référence ;
- Le procédé comprend en outre la détermination par tirage aléatoire ou pseudo aléatoire d'une valeur d'au moins une autre composante parmi l'au moins une autre composante de référence et l'au moins une autre composante d'épreuve ;

- Le procédé comprend en outre une étape d'enrôlement comprenant la génération de ladite clé de déchiffrement fonctionnel pour ladite fonction polynomiale de degré 1 ou 2 paramétrée avec ladite donnée biométrique de référence, à partir d'une clé maitresse et de ladite donnée biométrique de référence ;

- ladite clé de déchiffrement fonctionnel pour ladite fonction polynomiale de degré 1 ou 2 paramétrée avec ladite donnée biométrique de référence, est générée par application de ladite fonction polynomiale de degré 1 ou 2 entre ladite clé maitresse et ladite donnée biométrique de référence ;

- l'étape d'enrôlement comprend la génération de ladite clé de chiffrement fonctionnel à partir de ladite clé maitresse ;

- l'étape d'enrôlement comprend la génération de ladite clé maitresse, l'obtention d'au moins une donnée biométrique de référence, et, pour chaque donnée biométrique de référence obtenue, la génération de la clé de déchiffrement fonctionnel pour ladite fonction polynomiale de degré 1 ou 2 paramétrée avec ladite donnée biométrique de référence, de sorte à constituer une base de clés de déchiffrement fonctionnel ;

- l'étape de chiffrement fonctionnel comprend l'obtention de ladite donnée biométrique d'épreuve à partir du trait biométrique de l'individu candidat en utilisant des moyens d'acquisition biométrique du système ;

- la fonction polynomiale de degré 1 ou 2 est un produit scalaire ;

- Le procédé comprend en outre, pour i étant égal à 1 et 2, la mise en oeuvre de l'étape suivante par un dispositif d'indice i du système : Génération d'un résultat partiel d'indice i à partir du score et d'une donnée de démasquage d'indice i associée au masque primaire ;

- les dispositifs d'indices respectifs 1 et 2 sont distincts ;

- les résultats partiels d'indices respectifs 1 et 2 permettent le calcul d'un résultat de contrôle indiquant si la donnée biométrique d'épreuve correspond ou non à la donnée biométrique de référence ;

- le résultat de contrôle est égal à la somme des résultats partiels d'indices respectifs 1 et 2 ;

- le chiffrement fonctionnel de la donnée biométrique d'épreuve est mis en oeuvre par un dispositif du système, distinct des dispositifs d'indices 1 et 2, et/ou le résultat de contrôle est calculé à partir des résultats partiels d'indices respectifs 1 et 2 par un dispositif de sortie du système, distinct des dispositifs d'indices 1 et 2.

Selon un deuxième aspect, l'invention propose un programme d'ordinateur comprenant des instructions de code pour l'exécution d'un procédé de traitement de données biométriques tel que défini précédemment, lorsque ce programme est exécuté par un système.

Selon un troisième aspect, l'invention propose un moyen de stockage lisible par un équipement informatique sur lequel un programme d'ordinateur comprend des instructions de code pour l'exécution d'un procédé de traitement de données biométriques tel que défini précédemment.

Selon un quatrième aspect, l'invention propose un système de traitement de données biométriques, le système étant configuré pour la mise en oeuvre d'étapes de :

- Chiffrement fonctionnel d'une donnée biométrique d'épreuve en utilisant une clé de chiffrement fonctionnel,

- Pour au moins une donnée biométrique de référence, obtention d'un score représentant une distance entre la donnée biométrique d'épreuve et la donnée biométrique de référence, par déchiffrement fonctionnel de la donnée biométrique d'épreuve chiffrée en utilisant une clé de déchiffrement fonctionnel pour une fonction polynomiale de degré 1 ou 2 paramétrée avec ladite donnée biométrique de référence,

et le système étant caractérisé en ce que :

- La donnée biométrique d'épreuve est un vecteur comprenant n composantes d'épreuve représentatives d'un trait biométrique d'un individu candidat, avec n un entier naturel strictement supérieur à zéro, et au moins une autre composante d'épreuve non nulle représentative d'un premier élément de masquage,

- La donnée biométrique de référence est un autre vecteur comprenant n composantes de référence représentatives d'un trait biométrique d'un individu de référence et au moins une autre composante de référence non nulle représentative d'un deuxième élément de masquage, et

- Le score obtenu par déchiffrement fonctionnel, représente la distance entre la donnée biométrique d'épreuve et la donnée biométrique de référence sous une forme masquée par un masque primaire.

Ce système peut être configuré pour la mise en oeuvre de chacune des possibilités de réalisation envisagées pour le procédé de traitement de données biométriques tel que défini précédemment.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

D'autres caractéristiques et avantages de la présente invention ressortiront de la description faite ci-dessous, en référence aux figures annexées qui en illustrent des exemples de réalisation dépourvus de tout caractère limitatif.

Sur les figures:

[Fig 1] représente schématique un mode de réalisation préféré d'un système pour la mise en oeuvre d'un procédé selon l'invention ;
[Fig 2] illustre les étapes d'un mode de réalisation d'un procédé selon l'invention.

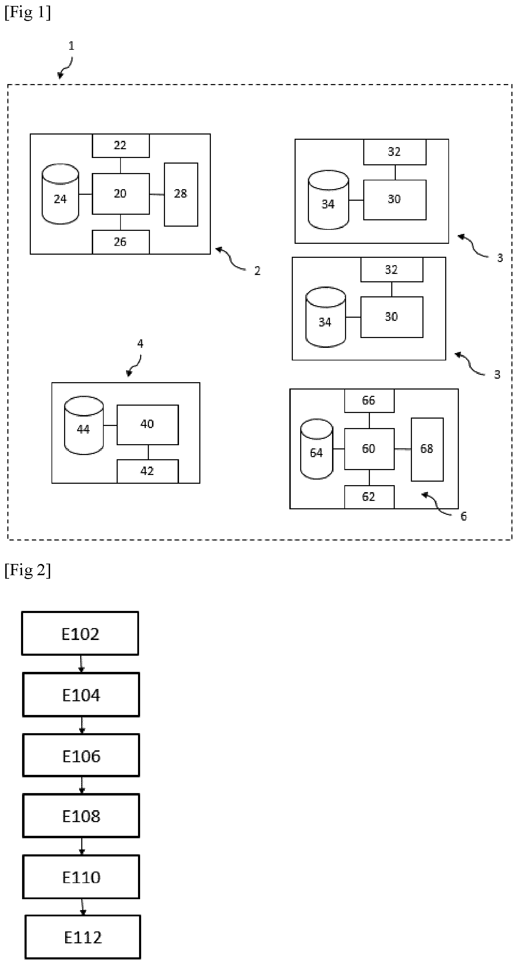

En référence à la figure 1, on a représenté schématiquement un système 1 de traitement de données biométriques pour la mise en oeuvre d'un procédé de traitement de données biométriques pour l'authentification/identification d'individus candidats.

Dans un mode de réalisation, le système 1 met en oeuvre une authentification d'un individu candidat, c'est-à-dire compare la donnée biométrique dite d'épreuve (fraîchement acquise sur l'individu candidat), à une seule donnée biométrique de référence, censée provenir du même individu, afin de vérifier que l'individu à partir duquel ont été obtenues les deux données est bien le même.

Dans un autre mode de réalisation, le système 1 met en oeuvre une identification de l'individu candidat, c'est-à-dire compare la donnée biométrique d'épreuve à toutes les données biométriques de référence d'une base, afin de déterminer l'identité de l'individu candidat.

Typiquement, la donnée biométrique d'épreuve et chaque donnée biométrique de référence sont respectivement des vecteurs dans un même espace vectoriel. La donnée biométrique d'épreuve comprend $n$ composantes d'épreuve représentatives d'un trait biométrique d'un individu candidat, avec $n$ un entier naturel strictement supérieur à zéro. Chaque donnée biométrique de référence comprend $n$ composantes de référence représentatives d'un trait biométrique d'un individu de référence.

Ce système 1 est un équipement détenu et contrôlé par une entité auprès de qui l'authentification/identification doit être effectuée, par exemple une entité gouvernementale, douanière, une société, etc. Dans la suite de la présente description on prendra l'exemple d'un aéroport, le système 1 visant typiquement à contrôler l'accès des passagers d'un vol avant leur embarquement.

Le système 1 comprend un dispositif de contrôle 2, au moins une paire de dispositifs participants 3, et un dispositif de confiance 4 et un dispositif d'enrôlement 6.

Le dispositif de contrôle 2 comprend un processeur 20, une interface de communication 22 pour communiquer avec le dispositif de confiance 4 et avec chaque dispositif participant 3, une mémoire 24 et un capteur biométrique 26.

Le processeur 20 est configuré pour mettre en oeuvre certaines étapes d'un procédé qui sera décrit plus loin. Le processeur peut avoir n'importe quelle structure. Le processeur comprend un ou plusieurs coeurs, chaque coeur étant configuré pour exécuter les instructions de code d'un programme de manière à mettre en oeuvre les étapes précitées.

L'interface de communication 22 est par exemple de type radio sans fil, et utilise un protocole de communication quelconque (Wi-Fi, Bluetooth, etc.).

Les communications entre l'interface de communication 22 du dispositif de contrôle 2 et des interfaces de communication 32 des dispositifs participants 3, peuvent utiliser des protocoles identiques ou bien différents des communications entre l'interface de communication 22 du dispositif de contrôle 2 et une interface de communication 42 du dispositif de confiance 4.

La mémoire 24 est adaptée pour mémoriser des données manipulées ou produites par le processeur 20. La mémoire 24 est de type quelconque. Conventionnellement, la mémoire comprend une mémoire volatile pour stocker des données temporairement, et une mémoire non-volatile pour stocker des données de manière persistante, c'est-à-dire d'une manière qui conserve les données lors d'une mise hors tension de la mémoire non volatile.

Le capteur biométrique 26 est configuré pour acquérir des données biométriques se rapportant à des individus. Par exemple, le capteur biométrique comprend une caméra configurée pour acquérir des images montrant le visage d'un individu candidat, et pour extraire des composantes d'épreuve de telles images. Alternativement ou à titre complémentaire, le capteur biométrique comprend un capteur d'empreinte digitale et/ou un capteur d'iris. Des traitements d'images variés pour extraire des composantes représentatives de l'individu, typiquement des composantes d'épreuve représentatives de l'individu candidat, sont connus de l'Homme du Métier. A titre d'exemple non limitatif, l'extraction des composantes représentatives de l'individu peut comprendre une extraction de points particuliers ou d'une forme du visage dans le cas où l'image est une image du visage de l'individu.

Dans un mode de réalisation, le dispositif de contrôle 2 comprend en outre un portique 28 pouvant être fermé pour empêcher un individu d'accéder à une zone sécurisée, et être ouvert pour autoriser un tel accès. Le processeur 20 est dans ce cas configuré pour commander l'ouverture et la fermeture du portique 28. Par exemple, le dispositif de contrôle 2 se trouve dans un aéroport, et la zone sécurisée est une zone d'embarquement ; dans cette application particulière, les individus candidats souhaitant accéder à la zone d'embarquement sont les passagers d'un vol, dont l'identité est à contrôler avant d'embarquer.

Chaque dispositif participant 3 comprend un processeur 30, une interface de communication 32 pour communiquer avec le dispositif de contrôle 2, avec le dispositif de confiance 4 et avec le dispositif d'enrôlement 6, et une mémoire 34. Les informations fournies ci-dessus à propos du processeur 20, de l'interface de communication 22, et de la mémoire 24 sont applicables également au processeur 30, à l'interface de communication 32, et à la mémoire 34.

Les communications entre l'interface de communication 32 d'un dispositif participant 3 et l'interface de communication 22 du dispositif de contrôle 2, peuvent utiliser des protocoles identiques ou bien différents des communications entre l'interface 32 du dispositif participant 3 et l'interface de communication 42 du dispositif de confiance 4 et/ou des communications entre l'interface 32 du dispositif participant 3 et une interface de communication 62 du dispositif d'enrôlement 6.

Les dispositifs participants 3 sont distincts les uns des autres. Dans la suite, on va détailler un mode de réalisation dans lequel les dispositifs participants 3 sont distincts du dispositif de contrôle 2, du dispositif de confiance 4 et du dispositif d'enrôlement 6, comme cela est représenté sur la figure 1. Toutefois, dans d'autres modes de réalisation, il peut être envisagé que le dispositif de contrôle 2 et/ou le dispositif d'enrôlement 6 constitue l'un des dispositifs participants 3.

Chaque mémoire 34 stocke une base de données de référence qui est une base de clés de déchiffrement fonctionnel, chaque clé de déchiffrement fonctionnel de ladite base étant associée à une donnée biométrique de référence se rapportant à un individu précédemment enrôlé, aussi dénommés individu de référence. Les données biométriques de référence ne sont pas stockées dans la base de données de référence. Une clé de déchiffrement fonctionnel ne permet pas de remonter à la donnée biométrique de référence associée. Les données biométriques de référence sont ainsi protégées en confidentialité.

Le dispositif de confiance 4 a pour fonction de générer une clé cryptographique dite clé maitresse, un masque primaire, des éléments de masquage associés au masque primaire, et des données de démasquage associées au masque primaire, utilisés par d'autres dispositifs du système. Le dispositif de confiance 4 comprend un processeur 40, une interface de communication 42 pour communiquer avec le dispositif de contrôle 2, avec le dispositif d'enrôlement 6 et avec chaque dispositif participant 3, et une mémoire 44. Les informations fournies ci-dessus à propos du processeur 20, de l'interface de communication 22 et de la mémoire 24 sont applicables également au processeur 40, à l'interface de communication 42 et à la mémoire 44.

Les communications entre l'interface de communication 42 du dispositif de confiance 4 et l'interface de communication 22 du dispositif de contrôle 2, les communications entre l'interface de communication 42 du dispositif de confiance 4 et l'interface de communication 62 du dispositif d'enrôlement 6, et les communications entre l'interface de communication 42 du dispositif de confiance 4 et l'interface 32 d'un dispositif participant 3, peuvent utiliser des protocoles identiques ou différents.

Le dispositif d'enrôlement 6 comprend un processeur 60, une interface de communication 62 pour communiquer avec le dispositif de confiance 4 et avec chaque dispositif participant 3, une mémoire 64, un capteur biométrique 66 et un lecteur de document 68. Les informations fournies ci-dessus à propos du processeur 20, de l'interface de communication 22, de la mémoire 24 et du capteur biométrique 26 sont applicables également au processeur 60, à l'interface de communication 62, à la mémoire 64 et au capteur biométrique 66. Le lecteur de document 68 est typiquement un capteur d'image, tel que par exemple un appareil photographique numérique ou une caméra numérique, adapté pour acquérir une image d'un document d'identité (par exemple un passeport), et/ou un moyen de communication de type contact ou de type sans contact (par exemple NFC, UHF, etc...) adapté pour lire le contenu d'une puce d'un document d'identité.

Dans la suite, on va détailler un mode de réalisation dans lequel le dispositif d'enrôlement 6 est distinct du dispositif de contrôle 2 et du dispositif de confiance 4. Toutefois, dans d'autres modes de réalisation, le dispositif de contrôle 2 ou le dispositif de confiance 4 pourrait être utilisé comme dispositif d'enrôlement 6.

La figure 2 illustre les étapes d'un mode de réalisation d'un procédé selon l'invention.

Les données biométriques de référence peuvent avoir été constituées en avance.

Chaque donnée biométrique de référence est avantageusement une donnée enregistrée dans un document d'identité d'un individu de référence. Par exemple, la donnée biométrique de référence peut être une donnée biométrique obtenue à partir d'une image du visage figurant sur un document d'identité (par exemple un passeport), ou encore d'une image du visage ou d'au moins un iris de l'individu enregistrée dans une puce radiofréquence contenue dans le document d'identité.

L'invention utilise un chiffrement fonctionnel pour une fonction polynomiale de degré 1 ou 2 paramétrée avec une donnée biométrique de référence. On comprend ainsi qu'on a autant de fonctions différentes que de données biométriques de référence. De manière préférée, ladite fonction polynomiale paramétrée avec une donnée biométrique de référence est une fonction « de distance avec la donnée biométrique de référence », permettant ainsi de comparer l'entrée de la fonction avec la donnée biométrique de référence, et préférentiellement la fonction « produit scalaire avec la donnée biométrique de référence », même si on pourra utiliser d'autres fonctions de distance, par exemple la distance euclidienne qui est de degré 2.

Comme l'on verra, l'invention se distingue en ce que la donnée d'entrée est un vecteur comprenant au moins n composantes d'épreuve représentatives d'un trait biométrique d'un individu candidat et au moins une autre composante d'épreuve non nulle représentative d'un premier élément de masquage, et en ce que la donnée biométrique de référence comprend n composantes de référence représentatives d'un trait biométrique d'un individu de référence et au moins une autre composante de référence non nulle représentative d'un deuxième élément de masquage, n est un entier naturel strictement supérieur à zéro.

Selon un premier exemple, la donnée d'entrée X est un vecteur dont les composantes sont $(x_1,...,x_n,u)$ et la donnée biométrique de référence Y est un vecteur dont les composantes sont $(y_1,...,y_n,m)$ avec $x_k$ la composante d'épreuve de rang k représentative du trait biométrique de l'individu candidat, u ladite au moins une autre composante d'épreuve représentative d'un premier élément de masquage (u), $y_k$ la composante de référence de rang k représentative du trait biométrique de l'individu de référence, m ladite au moins une autre composante de référence représentative d'un deuxième élément de masquage (m).

Selon un deuxième exemple, la donnée d'entrée X est un vecteur dont les composantes sont $(x_1,...,x_n,u,v)$ et la donnée biométrique de référence Y est un vecteur dont les composantes sont $(y_1,...,y_n,m,t)$ avec $x_k$ la composante d'épreuve de rang k représentative du trait biométrique de l'individu candidat, u et v deux autres composantes d'épreuve représentatives d'un premier élément de masquage (u,v), $y_k$ la composante de référence de rang k représentative du trait biométrique de l'individu de référence, m et t deux autres composantes de référence représentatives d'un deuxième élément de masquage (m,t).

Ainsi, le résultat s du déchiffrement fonctionnel d'un chiffré de la donnée d'entrée, aussi dénommé score par la suite, est directement le résultat de l'application à cette donnée d'entrée de la fonction polynomiale de degré 1 ou 2 paramétrée avec la donnée biométrique de référence, c'est-à-dire la distance de cette donnée d'entrée avec ladite donnée biométrique de référence sous une forme masquée par un masque primaire r. Le masque primaire r dépend du premier élément de masquage et du deuxième élément de masquage, c'est-à-dire des au moins une autre composante d'épreuve et au moins une autre composante de référence.

Le masque primaire r a pour valeur le résultat de l'application à l'au moins une autre composante d'épreuve de la fonction polynomiale de degré 1 ou 2 paramétrée avec l'au moins une autre composante de référence.

Le procédé proposé apporte de la sécurité car la distance en clair n'est jamais calculée.

Quand la fonction polynomiale de degré 1 ou 2 est un produit scalaire et quand la donnée biométrique d'épreuve et la donnée biométrique de référence sont définies selon le premier exemple décrit ci-avant, le score s a pour valeur $u \cdot$

$$m + \sum_{k=1}^{n} x_k \cdot y_k$$

, le masque primaire r ayant pour valeur $u \cdot m$ et la distance ayant pour valeur

$$\sum_{k=1}^{n} x_k \cdot y_k.$$

Quand la fonction polynomiale de degré 1 ou 2 est un produit scalaire et quand la donnée biométrique d'épreuve et la donnée biométrique de référence sont définies selon le deuxième exemple décrit ci-avant, le score s a pour valeur $u \cdot$

$$m + v \cdot t + \sum_{k=1}^{n} x_k \cdot y_k$$

, le masque primaire r ayant pour valeur $u \cdot m + v \cdot t$ et la distance ayant pour valeur

$$\sum_{k=1}^{n} x_k \cdot y_k.$$

Il suffit ainsi d'avoir plusieurs clés de déchiffrement $(sk_1, sk_2...)$, chacune associée à une donnée biométrique de référence, afin d'être en mesure de calculer la fonction polynomiale pour chacune de ces données biométriques de référence, i.e. des distances sous forme masquée avec toutes ces données biométriques de référence comme autant de fonctions différentes.

En notant :

- Dec la fonction de déchiffrement fonctionnel
- Enc la fonction de chiffrement fonctionnel
- $Y_j$ la j-eme donnée biométrique de référence,
- X une donnée biométrique d'épreuve,
- r le masque primaire,
- d(A,B) la distance entre A et B,
- $f_j$ ladite fonction polynomiale de degré 1 ou 2 paramétrée avec $Y_j$,
- pk la clé de chiffrement fonctionnel,
- $sk_j$ la clé de déchiffrement fonctionnel pour la fonction $f_j$,

alors si la fonction polynomiale est une fonction de distance on a :

$$\text{Dec}(\text{sk}_j, \text{Enc}(\text{pk}, X)) = f_j(X) = d(X, Y_j) + r.$$

De manière préférée, la ou les clés de déchiffrement associées à chaque donnée biométrique de référence, sont générées à la volée à partir de ladite donnée biométrique de référence, de sorte qu'on ne stocke pas les données biométriques de référence (ce qui évite tout risque de divulgation, et est en outre très économique en termes de taille de stockage), et on constitue en direct une base des clés de déchiffrement plutôt qu'une base de données biométrique de référence. Par exemple, chaque clé de déchiffrement est directement générée à la lecture du document d'identité correspondant.

A ce titre, en référence à la figure 2, le procédé commence préférentiellement par une étape d'enrôlement (étape E102), comprenant la génération de ladite clé de déchiffrement fonctionnel pour la fonction polynomiale de degré 1 ou 2 paramétrée avec ladite donnée biométrique de référence, à partir d'une clé maitresse et de ladite donnée biométrique de référence.

En effet, le chiffrement fonctionnel prévoit cette possibilité d'utiliser une clé maitresse secrète (master key), et dans le cas d'une fonction polynomiale de degré 1 ou 2, ladite clé de déchiffrement fonctionnel pour la fonction polynomiale de degré 1 ou 2 paramétrée avec ladite donnée biométrique de référence est typiquement générée par l'application de ladite fonction polynomiale de degré 1 ou 2 entre ladite clé maitresse et ladite donnée biométrique de référence, e.g. par application d'un produit scalaire entre ladite clé maitresse et ladite donnée biométrique de référence si ladite fonction est le produit scalaire.

La génération de ladite clé de déchiffrement fonctionnel est typiquement mise en oeuvre par le dispositif d'enrôlement 6 et la mémoire 64 du dispositif d'enrôlement stocke la clé de déchiffrement générée. Le dispositif d'enrôlement 6 envoie la clé de déchiffrement générée aux dispositifs participants 3, typiquement en utilisant son interface de communication 62. Chaque dispositif participant 3 reçoit la clé de déchiffrement générée en provenance du dispositif d'enrôlement 6, typiquement en utilisant son interface de communication 32, puis stocke ladite clé de déchiffrement dans sa mémoire 34.

L'étape d'enrôlement (étape E102) peut également comprend la génération de ladite clé de chiffrement fonctionnel à partir de la même clé maitresse, ce qui permet d'avoir des clés de chiffrement et de déchiffrement associées. La génération de ladite clé de chiffrement fonctionnel est typiquement mise en oeuvre par le dispositif de contrôle 2.

Selon une autre possibilité, la génération de ladite clé de chiffrement fonctionnel est mise en oeuvre par le dispositif de confiance 4 puis le dispositif de confiance 4 envoie au dispositif de contrôle 2 la clé de chiffrement fonctionnel générée, typiquement en utilisant son interface de communication 42. Le dispositif de contrôle 2 reçoit la clé de chiffrement fonctionnel générée en provenance du dispositif de confiance 4, typiquement en utilisant son interface de communication 22, puis stocke ladite clé de chiffrement dans sa mémoire 24.

On peut avoir une clé maitresse unique, mais alternativement on a une clé maitresse par « session », c'est-à-dire par groupe d'identifications/authentifications. Par exemple, dans le cas de contrôle de passagers avant embarquement, on a une clé maitresse par vol, qui peut être tirée dans une liste, générée aléatoirement ou à l'aide d'un algorithme pseudo aléatoire, etc.

Ainsi, de manière particulièrement préférée l'étape d'enrôlement (étape E102) comprend la génération de ladite clé maitresse, typiquement par le dispositif de confiance 4. La clé maitresse est par exemple générée aléatoirement ou à l'aide d'un algorithme pseudo aléatoire, etc. La clé maitresse est mémorisée dans la mémoire 44.

Le dispositif de confiance 4 peut envoyer la clé maitresse au dispositif d'enrôlement 6 et au dispositif de contrôle 2, typiquement en utilisant son interface de communication 42.

De manière également préférée, l'étape d'enrôlement (étape E102) comprend l'obtention d'au moins une donnée biométrique de référence $Y_j$, typiquement par le dispositif d'enrôlement 6, et, pour chaque donnée biométrique de référence $Y_j$ obtenue, la génération, typiquement par le dispositif d'enrôlement 6, de la clé de déchiffrement fonctionnel $sk_j$ pour la fonction polynomiale de degré 1 ou 2 paramétrée avec ladite donnée biométrique de référence $Y_j$, de sorte à constituer une base de clés de déchiffrement fonctionnel $sk_j$. La clé de chiffrement pk est également générée en même temps, typiquement par le dispositif de contrôle 2.

Le dispositif d'enrôlement 6 envoie une clé de déchiffrement générée aux dispositifs participants 3, typiquement en utilisant son interface de communication 62. Un dispositif participant 3 reçoit une clé de déchiffrement en provenance du dispositif d'enrôlement 6, typiquement en utilisant son interface de communication 32, puis stocke ladite clé de déchiffrement dans sa mémoire 34.

Selon une autre possibilité, le dispositif d'enrôlement 6 envoie la base de clés de déchiffrement aux dispositifs participants 3, typiquement en utilisant son interface de communication 62. Chaque dispositif participant 3 reçoit la base de clés de déchiffrement en provenance du dispositif d'enrôlement 6, typiquement en utilisant son interface de communication 32, puis stocke ladite base de clés de déchiffrement dans sa mémoire 34.

Les données biométriques de référence $Y_j$ peuvent ne pas avoir été constituées en avance.

Dans ce cas, chaque donné biométrique de référence peut avantageusement être obtenue à partir d'une donnée enregistrée dans un document d'identité d'un individu de référence, typiquement des composantes de référence représentatives de l'individu de référence. Par exemple, les composantes de référence peuvent être obtenues à partir d'une image du visage figurant sur un document d'identité (par exemple un passeport), ou encore d'une image du visage ou d'au moins un iris de l'individu enregistré dans une puce radiofréquence contenue dans le document d'identité.

L'obtention d'au moins une donnée biométrique de référence $Y_j$, peut ainsi comprendre pour chaque donnée biométrique de référence $Y_j$, l'obtention des composantes de référence représentatives de l'individu de référence, typiquement par le dispositif d'enrôlement 6 via son lecteur de document 68, puis la concaténation desdites composantes de références avec les autres composantes de référence, la donnée biométrique de référence $Y_j$ étant le résultat de cette concaténation.

Quand les données de référence sont constituées en avance, l'obtention d'au moins une donnée biométrique de référence est avantageusement, pour chaque donnée biométrique de référence, à partir d'un document d'identité (par exemple un passeport), typiquement via le lecteur de document 68 du dispositif d'enrôlement 6.

De manière également préférée, l'étape d'enrôlement (étape E102) comprend la détermination par tirage aléatoire ou pseudo aléatoire d'une valeur d'au moins une autre composante parmi l'au moins une autre composante de référence et l'au moins une autre composante d'épreuve.

Par exemple, u est déterminé par tirage aléatoire et m a une valeur prédéterminée, typiquement 1, ou inversement.

Avantageusement, quand les données biométriques de référence sont constituées en avance, l'au moins une autre composante de référence a une valeur prédéterminée.

Selon un autre exemple u et m sont déterminés par tirage aléatoire.

Cette détermination est typiquement mise en oeuvre par le dispositif de confiance 4.

Le dispositif de confiance 4 peut envoyer l'au moins une autre composante de référence déterminée au dispositif d'enrôlement 6, typiquement en utilisant son interface de communication 42. Le dispositif d'enrôlement 6 reçoit l'au moins une autre composante de référence en provenance du dispositif de confiance 4, typiquement en utilisant son interface de communication 62.

Le dispositif de confiance 4 peut aussi envoyer l'au moins une autre composante d'épreuve au dispositif de contrôle 2, typiquement en utilisant son interface de communication 42. Le dispositif de contrôle 2 reçoit l'au moins une autre composante d'épreuve en provenance du dispositif de confiance 4, typiquement en utilisant son interface de communication 22.

Quand au moins une autre composante de référence et au moins une autre composante d'épreuve sont déterminées par tirage aléatoire ou pseudo aléatoire, la sécurité est augmentée.

Le procédé en lui-même commence par une étape de chiffrement fonctionnel (étape E104) d'une donnée biométrique d'épreuve X en utilisant ladite clé de chiffrement fonctionnel pk.

Cette étape est typiquement mise en oeuvre par le dispositif de contrôle 2.

Il est important de comprendre que si l'enrôlement peut être mise en oeuvre bien avant l'authentification/identification en elle-même, la donnée biométrique d'épreuve X doit être obtenue au pire quelques minutes avant, pour garantir la « fraicheur » des composantes d'épreuves de la donnée biométrique d'épreuve.

De manière avantageuse, l'étape de chiffrement fonctionnel (étape E104) comprend l'obtention de ladite donnée biométrique d'épreuve X à partir d'un trait biométrique de l'individu candidat en utilisant des moyens d'acquisition biométrique du système 1, typiquement le capteur biométrique 26 du dispositif de contrôle 2.

Comme expliqué, le dispositif de contrôle 2 comprend un capteur biométrique 26 pour l'obtention des composantes d'épreuves fraiches. Généralement, la donnée biométrique d'épreuve X est générée par le processeur 20 à partir d'un trait biométrique fourni par le capteur biométrique 26, typiquement en concaténant lesdites composantes d'épreuve avec les autres composantes d'épreuve, la donnée biométrique d'épreuve X étant le résultat de cette concaténation. Mais le capteur biométrique 26 peut comprendre des moyens de traitement pour extraire les composantes d'épreuve et peut par exemple prendre la forme d'un dispositif automatique fourni par des autorités de contrôle (dans l'aéroport). Un tel dispositif automatique peut le cas échéant concaténer lesdites composantes d'épreuve avec les autres composantes d'épreuve.

De façon préférée le capteur biométrique 26 est capable de détecter le vivant, de sorte à s'assurer que la donnée biométrique d'épreuve X est issue d'un trait « réel ».

Dans le cas où le capteur biométrique 26 et le dispositif de contrôle 2 sont distant, la communication entre les deux peut être chiffrée.

Le présent procédé se distingue comme expliqué de manière très originale en ce que la donnée biométrique d'épreuve X est un vecteur comprenant au moins n composantes d'épreuve représentatives d'un trait biométrique d'un individu candidat, avec n un entier naturel strictement supérieur à zéro, et au moins une autre composante d'épreuve non nulle représentative d'un premier élément de masquage.

Le procédé se poursuit avec une étape d'obtention d'un score (étape E106), pendant laquelle le système 1 obtient pour au moins une donnée biométrique de référence $Y_j$, un score s représentant une distance entre la donnée biométrique d'épreuve X et ladite donnée biométrique de référence $Y_j$, par déchiffrement fonctionnel de la donnée biométrique d'épreuve chiffrée en utilisant une clé $sk_j$ de déchiffrement fonctionnel pour une fonction polynomiale de degré 1 ou 2 paramétrée avec ladite donnée biométrique de référence $Y_j$.

Grâce à l'au moins une autre composante de référence de la donnée biométrique de référence et à l'au moins une autre composante d'épreuve de la donnée biométrique d'épreuve, le résultat du chiffrement fonctionnel n'est pas la distance de cette donnée biométrique d'épreuve X avec ladite donnée biométrique de référence $Y_j$ en clair, mais la distance de cette donnée biométrique d'épreuve X avec ladite donnée biométrique de référence $Y_j$ sous une forme masquée par le masque primaire r.

Le procédé proposé apporte de la sécurité car la distance en clair n'est jamais calculée.

Le procédé permet ainsi d'empêcher un attaquant d'obtenir des informations relatives à une donnée biométrique de référence sans limiter le nombre d'itération du procédé pour une même donnée biométrique de référence.

L'étape d'obtention d'un score (étape E106) est typiquement mise en oeuvre par chaque dispositif participant 3 du système 1. Ainsi, chaque dispositif participant 3 obtient pour une données biométrique d'épreuve X et une donnée biométrique de référence $Y_j$ données, la distance de cette donnée biométrique d'épreuve X avec cette donnée biométrique de référence $Y_j$ sous une forme masquée par le masque primaire r.

Selon une autre possibilité, un seul dispositif du système 1 peut mettre en oeuvre l'étape d'obtention d'un score (étape E106), typiquement un dispositif participant 3.

Le procédé peut comprendre en outre, pour i étant égal à 1 et 2, la mise en oeuvre d'une étape de génération (étape E108) par un dispositif participant 3 d'indice i, d'un résultat partiel $o_i$ d'indice i à partir du score s et d'une donnée de démasquage $k_i$ d'indice i.

Les dispositifs participants 3 d'indices respectifs 1 et 2 sont distincts.

L'étape de génération (étape E108) est ainsi mise en oeuvre par chaque dispositif participant 3 d'au moins une paire de dispositifs participants 3 du système 1.

Les résultats partiels d'indices respectifs 1 et 2 permettent le calcul d'un résultat de contrôle (o) indiquant si la donnée biométrique d'épreuve correspond ou non à la donnée biométrique de référence.

Le procédé permet ainsi l'intégration du calcul de la distance entre la donnée biométrique d'épreuve et la donnée biométrique de référence, et de la comparaison de la distance calculée avec un seuil, sans calcul ni manipulation de la distance en clair, ce qui sécurise d'autant plus le procédé vis-à-vis des attaques cherchant à obtenir de l'information sur la donnée biométrique de référence.

En outre, le procédé permet la génération des résultats partiels sans que les dispositifs participants 3 d'indices respectifs 1 et 2 n'aient besoin d'échanger d'information entre eux.

Si un dispositif participant 3 d'indice i ne calcule pas le score s pendant l'étape d'obtention d'un score (étape E106) du procédé, ce dispositif participant 3 d'indice i peut recevoir le score s d'un dispositif du système 1 qui a calculé ledit score s, typiquement via son interface de communication 32.

On notera qu'un dispositif manipulant un score s, typiquement un dispositif mettant en oeuvre l'étape d'obtention d'un score (étape E106) et/ou l'étape de génération d'un résultat partiel (étape E108), par exemple un dispositif participant 3, ne doit pas disposer de toutes les autres composantes d'épreuve et de toutes les autres composantes de référence, ni du masque primaire, pour assurer la sécurité de la donnée biométrique de référence.

Les données de démasquage d'indices respectifs 1 et 2, sont typiquement générées pendant l'étape d'enrôlement (étape E102) avec le masque primaire r, de préférence par le dispositif de confiance 4 qui envoie alors au dispositif participant d'indice 1 la donnée de démasquage d'indice 1, et au dispositif participant d'indice 2 la donnée de démasquage d'indice 2. Par exemple, le masque primaire r et les deux données de démasquage d'indices respectifs 1 et 2 sont générés par la fonction Funshade. Setup() décrite dans le document « Funshade: Functional Secret Sharing for Two-Party Secure Thresholded Distance Evaluation », Alberto Ibarrondo, Hervé Chabanne and Melek Önen, https://eprint.iacr.org/2022/1688/ , puis l'au moins une autre composante de référence et l'au moins une autre composante d'épreuve sont déterminées telles que le masque primaire r a pour valeur le résultat de l'application à l'au moins une autre composante d'épreuve de la fonction polynomiale de degré 1 ou 2 paramétrée avec l'au moins une autre composante de référence. Typiquement, quand la fonction polynomiale de degré 1 ou 2 est un produit scalaire et quand la donnée biométrique d'épreuve et la donnée biométrique de référence sont définies selon le premier exemple décrit plus haut, l'au moins une autre composante d'épreuve u peut être déterminée comme suit : $u = r.m^{-1}$, l'au moins une autre composante de référence m ayant une valeur prédéterminée ou ayant une valeur déterminée par tirage aléatoire ou pseudo aléatoire.

On notera qu'un dispositif manipulant un score s ne doit pas disposer à la fois de la donnée de démasquage d'indice 1 et de la donnée de démasquage d'indice 2.

De préférence, le chiffrement fonctionnel de la donnée biométrique d'épreuve est mis en oeuvre par un dispositif distinct des dispositifs participant 3 d'indices 1 et 2.

Pendant l'étape de génération d'un résultat partiel (étape E108), le dispositif participant 3 d'indice i calcule un résultat partiel $o_i$ d'indice i à partir du score s et de la donnée de démasquage ki d'indice i : $o_i$ = FSS.eval (i,ki,s), puis le dispositif participant 3 d'indice i envoie le résultat partiel $o_i$ à un dispositif de sortie, par exemple le dispositif de contrôle 2 via son interface de communication 32. La fonction FSS.eval est typiquement telle que décrite dans le document « Funshade: Functional Secret Sharing for Two-Party Secure Thresholded Distance Evaluation », Alberto Ibarrondo, Hervé Chabanne and Melek Önen, https://eprint.iacr.org/2022/1688/.

Comme indiqué précédemment, le traitement constitué par l'étape de génération d'un résultat partiel (étape E108) est mis en oeuvre deux fois : une fois par le dispositif participant d'indice 1 et une fois par le dispositif participant d'indice 2. Ainsi deux résultats partiels $o_1$, $o_2$ sont générés.

Le procédé se poursuit avec une étape d'obtention d'un résultat de contrôle o (étape E110), pendant laquelle le système 1 calcule un résultat de contrôle à partir des résultats partiels d'indices respectifs 1 et 2.

La paire de résultats partiels, a pour propriété de permettre le calcul d'un résultat de contrôle o indiquant si la donnée biométrique d'épreuve correspond ou non à la donnée biométrique de référence. En revanche, il n'est pas possible de calculer ce résultat de contrôle sur la base d'un seul des deux résultats partiels.

L'étape d'obtention d'un résultat de contrôle o (étape E110) est typiquement mise en oeuvre par un dispositif de sortie distinct des dispositifs d'indices 1 et 2, ici le dispositif de contrôle 2, qui a reçu la paire de résultats partiels $o_1$, $o_2$ des deux dispositifs participants 3, par exemple via son interface de communication 22.

Dans un mode de réalisation, le résultat de contrôle est obtenu en sommant les résultats partiels, comme suit : $o = o_1 + o_2$.

En définitive, le chiffrement fonctionnel, puis le déchiffrement fonctionnel, la génération de résultats partiels et l'étape d'obtention d'un résultat de contrôle permettent une comparaison entre un seuil, et la distance entre la donnée biométrique d'épreuve et la donnée biométrique de référence. Le seuil est défini dans la fonction FSS.Setup() utilisée pour la génération du masque primaire et des données de démasquage (le seuil est en quelque sorte encodé par ces données).

En pratique, le résultat de contrôle peut être un booléen.

Si le résultat de contrôle indique que la donnée biométrique d'épreuve correspond à la donnée biométrique de référence, alors il est considéré que l'individu candidat auquel se rapporte la donnée biométrique d'épreuve a préalablement été enrôlé auprès du système 1. Dans ces conditions, le processeur 20 peut commander dans une étape de contrôle d'accès (étape E112), une ouverture du portique 28, afin de permettre à l'individu candidat d'accéder à une zone sécurisée.

Si le résultat de contrôle indique que la donnée biométrique d'épreuve ne correspond pas à la donnée biométrique de référence, alors il est considéré que l'individu contrôlé, c'est-à-dire l'individu candidat, n'est pas l'individu de référence auquel se rapporte la donnée biométrique de référence.

Les étapes qui précèdent (en particulier l'étape d'obtention d'un score, l'étape de génération d'un résultat partiel et l'étape d'obtention d'un résultat de contrôle) peuvent être mise en oeuvre U fois pour différentes clés de déchiffrement se rapportant à des données biométriques de référence différentes.

Ces U mises en oeuvre peuvent être séquentielles. En variante, on peut lancer U processus en parallèle mettant chacun en oeuvre l'étape d'obtention d'un score, l'étape de génération d'un résultat partiel et l'étape d'obtention d'un résultat de contrôle décrites précédemment, et agréger les résultats finaux à l'étape de contrôle d'accès.

Le procédé décrit précédemment peut faire l'objet d'autres variantes.

On peut avoir le masque primaire, la au moins une autre composante d'épreuve, la au moins une autre composante de référence et les données de démasquages déterminés une fois et pour toujours, pour le système 1.

Alternativement, le masque primaire, la au moins une autre composante d'épreuve, la au moins une autre composante de référence et les données de démasquages sont générés, typiquement pendant l'étape d'enrôlement, par « session ».

Selon une autre possibilité, le masque primaire, la au moins une autre composante d'épreuve et les données de démasquages sont des données à usage unique pour une donnée biométrique d'épreuve. Avec cette possibilité, le masque primaire, la au moins une autre composante d'épreuve et les données de démasquages peuvent être réutilisables plusieurs fois, pour différents individus de référence, lors d'un contrôle de l'individu candidat auquel la donnée biométrique d'épreuve se rapporte.

Aussi, le masque primaire, la au moins une autre composante d'épreuve et les données de démasquages peuvent être générés pendant l'étape de chiffrement fonctionnel.

Dans un mode de réalisation particulièrement avantageux, seulement une paire de dispositifs participants 3 d'indices respectifs 1 et 2 est utilisée. Les inventeurs ont pu constater que ce mode de réalisation est simple de mise en oeuvre, tout en étant raisonnablement rapide et sécurisé. Toutefois, il est également possible d'utiliser plusieurs paires de dispositifs participants mettant en oeuvre le procédé décrit plus haut.

Pour chaque paire de dispositifs participants 3, la somme des résultats partiels de la paire est égale au résultat de contrôle. En revanche, le dispositif de confiance 4 peut fournir à des paires de participants différentes des données de démasquage différentes. Le bénéfice d'utiliser plusieurs paires de dispositifs 3 est de faire de la redondance pour s'assurer qu'il n'y a pas eu une erreur de calcul par une paire, par exemple en cas d'attaques.

Dans le procédé décrit précédemment, chaque mémoire 34 stocke une base de données de référence qui est une base des clés de déchiffrement fonctionnel.

Selon une variante, aucune mémoire 34 ne stocke la base des clés de déchiffrement fonctionnel, la base des clés de déchiffrement fonctionnel étant stockée dans la mémoire 64 du dispositif d'enrôlement 6. Un dispositif participant 3 qui met en oeuvre l'étape d'obtention d'un score (étape E106) peut alors obtenir la clé de déchiffrement fonctionnel requise pour l'exécution de cette étape, du dispositif d'enrôlement (par l'intermédiaire de l'interface de communication 32 dudit dispositif participant et de l'interface de communication 62 du dispositif d'enrôlement) puis effacer ladite clé de déchiffrement reçue une fois l'exécution de l'étape d'obtention d'un score terminée.

Dans ce qui précède, il a été discuté une application particulière du procédé, dans laquelle le résultat du contrôle conditionne un accès à une zone sécurisée. Il est toutefois entendu que le procédé décrit peut être utilisé pour d'autres applications.

## Revendications

1. Procédé de traitement de données biométriques, le procédé comprenant la mise en oeuvre par un système (1) d'étapes de :

   - Chiffrement fonctionnel (E104) d'une donnée biométrique d'épreuve (X) en utilisant une clé (pk) de chiffrement fonctionnel,
   - Pour au moins une donnée biométrique de référence ($Y_j$), obtention d'un score (E106) représentant une distance entre la donnée biométrique d'épreuve (X) et la donnée biométrique de

référence (Y$_j$), par déchiffrement fonctionnel de la donnée biométrique d'épreuve chiffrée, en utilisant une clé (sk$_j$) de déchiffrement fonctionnel pour une fonction polynomiale de degré 1 ou 2 paramétrée avec ladite donnée biométrique de référence (Y$_j$),
- Enrôlement (E102) comprenant la génération de ladite clé (sk$_j$) de déchiffrement fonctionnel pour ladite fonction polynomiale de degré 1 ou 2 paramétrée avec ladite donnée biométrique de référence (Y$_j$), à partir d'une clé maitresse et de ladite donnée biométrique de référence (Y$_j$), et la génération de ladite clé (pk) de chiffrement fonctionnel à partir de ladite clé maitresse ;

dans lequel :

- La donnée biométrique d'épreuve (X) est un vecteur comprenant n composantes d'épreuve (x$_k$) représentatives d'un trait biométrique d'un individu candidat, avec n un entier naturel strictement supérieur à zéro, et au moins une autre composante d'épreuve (u,v) non nulle représentative d'un premier élément de masquage,
- La donnée biométrique de référence (Y$_j$) est un autre vecteur comprenant n composantes de référence (y$_k$) représentatives d'un trait biométrique d'un individu de référence et au moins une autre composante de référence (m,t) non nulle représentative d'un deuxième élément de masquage, et
- Le score (s) obtenu par déchiffrement fonctionnel, représente la distance entre la donnée biométrique d'épreuve (X) et la donnée biométrique de référence (Y$_j$) sous une forme masquée par un masque primaire (r).

2. Procédé selon la revendication précédente dans lequel le masque primaire (r) a pour valeur le résultat de l'application à l'au moins une autre composante d'épreuve (u,v) de la fonction polynomiale de degré 1 ou 2 paramétrée avec l'au moins une autre composante de référence (m,t).

3. Procédé selon l'une quelconque des revendications précédentes, comprenant en outre la détermination par tirage aléatoire ou pseudo aléatoire d'une valeur d'au moins une autre composante parmi l'au moins une autre composante de référence (m,t) et l'au moins une autre composante d'épreuve (u,v).

4. Procédé selon l'une quelconque des revendications 1 à 3, dans lequel ladite clé (sk$_j$) de déchiffrement fonctionnel pour ladite fonction polynomiale de degré 1 ou 2 paramétrée avec ladite donnée biométrique de référence (Y$_j$), est générée par application de ladite fonction polynomiale de degré 1 ou 2 entre ladite clé maitresse et ladite donnée biométrique de référence.

5. Procédé selon l'une quelconque des revendications 1 à 4, dans lequel l'étape d'enrôlement (E102) comprend :

- la génération de ladite clé maitresse,
- l'obtention d'au moins une donnée biométrique de référence (Y$_j$), et,
- pour chaque donnée biométrique de référence (Y$_j$) obtenue, la génération de la clé (sk$_j$) de déchiffrement fonctionnel pour ladite fonction polynomiale de degré 1 ou 2 paramétrée avec ladite donnée biométrique de référence(Y$_j$), de sorte à constituer une base de clés de déchiffrement fonctionnel.

6. Procédé selon l'une quelconque des revendications précédentes, dans lequel l'étape de chiffrement fonctionnel (E104) comprend l'obtention de ladite donnée biométrique d'épreuve (X) à partir du trait biométrique de l'individu candidat en utilisant des moyens d'acquisition biométrique (26) du système (1).

7. Procédé selon l'une quelconque des revendications précédentes, dans lequel la fonction polynomiale de degré 1 ou 2 est un produit scalaire.

8. Procédé selon l'une quelconque des revendications précédentes, le procédé comprenant en outre, pour i étant égal à 1 et 2, la mise en oeuvre de l'étape suivante (E108) par un dispositif (3) d'indice i du système (1) :

- Génération d'un résultat partiel (o$_i$) d'indice i à partir du score (s) et d'une donnée de démasquage (ki) d'indice i associée au masque primaire (r),

Et dans lequel :

- les dispositifs (3) d'indices respectifs 1 et 2 sont distincts,
- les résultats partiels d'indices respectifs 1 et 2 permettent le calcul d'un résultat de contrôle (o) indiquant si la donnée biométrique d'épreuve (X), correspond ou non à la donnée biométrique de référence (Y$_j$).

9. Procédé selon la revendication précédente, dans lequel le résultat de contrôle (o) est égal à la somme des résultats partiels (o$_1$, o$_2$) d'indices respectifs 1 et 2.

10. Procédé selon l'une quelconque des revendications 10 ou 11, dans lequel le chiffrement fonctionnel de la donnée biométrique d'épreuve (X) est mis en oeuvre par un dispositif (2) du système (1), distinct des dispositifs (3) d'indices 1 et 2, et/ou le résultat de contrôle (o) est calculé (étape E110) à partir des résultats partiels ($o_1$, $o_2$) d'indices respectifs 1 et 2 par un dispositif de sortie (2) du système (1), distinct des dispositifs (3) d'indices 1 et 2.

11. Programme d'ordinateur comprenant des instructions de code pour l'exécution d'un procédé selon l'une quelconques des revendications précédentes, lorsque ce programme est exécuté par un système.

12. Moyen de stockage lisible par un équipement informatique sur lequel un programme d'ordinateur comprend des instructions de code pour l'exécution d'un procédé selon l'une quelconque des revendications 1 à 12.

13. Système (1) de traitement de données biométriques, le système étant configuré pour la mise en oeuvre d'étapes de :

    - Chiffrement fonctionnel d'une donnée biométrique d'épreuve (X) en utilisant une clé (pk) de chiffrement fonctionnel,
    - Pour au moins une donnée biométrique de référence ($Y_j$), obtention d'un score (s) représentant une distance entre la donnée biométrique d'épreuve (X) et la donnée biométrique de référence ($Y_j$), par déchiffrement fonctionnel de la donnée biométrique d'épreuve chiffrée en utilisant une clé ($sk_j$) de déchiffrement fonctionnel pour une fonction polynomiale de degré 1 ou 2 paramétrée avec ladite donnée biométrique de référence ($Y_j$),
    - enrôlement (E102) comprenant la génération de ladite clé ($sk_j$) de déchiffrement fonctionnel pour ladite fonction polynomiale de degré 1 ou 2 paramétrée avec ladite donnée biométrique de référence ($Y_j$), à partir d'une clé maitresse et de ladite donnée biométrique de référence ($Y_j$), et la génération de ladite clé (pk) de chiffrement fonctionnel à partir de ladite clé maitresse ;

dans lequel :

    - La donnée biométrique d'épreuve (X) est un vecteur comprenant n composantes d'épreuve ($x_k$) représentatives d'un trait biométrique d'un individu candidat, avec n un entier naturel strictement supérieur à zéro, et au moins une autre composante d'épreuve (u,v) non nulle représentative d'un premier élément de masquage,
    - La donnée biométrique de référence ($Y_j$) est un autre vecteur comprenant n composantes de référence ($y_k$) représentatives d'un trait biométrique d'un individu de référence et au moins une autre composante de référence (m,t) non nulle représentative d'un deuxième élément de masquage, et
- Le score (s) obtenu par déchiffrement fonctionnel, représente la distance entre la donnée biométrique d'épreuve (X) et la donnée biométrique de référence ($Y_j$) sous une forme masquée par un masque primaire (r).

[Fig 1]

[Fig 2]

EP 4 456 477 A1

Europäisches
Patentamt
European
Patent Office
Office européen
des brevets

**RAPPORT DE RECHERCHE EUROPEENNE**

Numéro de la demande

EP 24 16 8685

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | AMBRONA MIGUEL ET AL: "Controlled Functional Encryption Revisited: Multi-Authority Extensions and Efficient Schemes for Quadratic Functions", PROCEEDINGS ON PRIVACY ENHANCING TECHNOLOGIES, vol. 2021, no. 1, 9 novembre 2020 (2020-11-09), pages 21-42, XP055868271, DOI: 10.2478/popets-2021-0003 | 1-7, 11-13 | INV. H04L9/30 H04L9/32 |
| Y | * sections 1, 3.4 and 5; figure 3 * | 8-10 | |
| X | CHLOE CACHET ET AL: "Proximity Searchable Encryption for Biometrics", IACR, INTERNATIONAL ASSOCIATION FOR CRYPTOLOGIC RESEARCH , vol. 20200925:185209 25 septembre 2020 (2020-09-25), pages 1-36, XP061036482, Extrait de l'Internet: URL:http://eprint.iacr.org/2020/1174.pdf [extrait le 2020-09-25] | 1-7, 11-13 | |
| Y | * sections 1, 4.2, 5 * | 8-10 | |
| X | US 2022/131698 A1 (BADRINARAYANAN SAIKRISHNA [US] ET AL) 28 avril 2022 (2022-04-28) | 1-7, 11-13 | |
| Y | * alinéas [0098] - [0107]; figure 3 * | 8-10 | |

DOMAINES TECHNIQUES RECHERCHES (IPC)

H04L

-/--

Le présent rapport a été établi pour toutes les revendications

| Lieu de la recherche | Date d'achèvement de la recherche | Examinateur |
|---|---|---|
| Munich | 10 septembre 2024 | Manet, Pascal |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 24 16 8685

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y,D | Ibarrondo Alberto ET AL: "Funshade: Functional Secret Sharing for Two-Party Secure Thresholded Distance Evaluation", eprint IACR, 5 décembre 2022 (2022-12-05), pages 1-12, XP093111440, Extrait de l'Internet: URL:https://eprint.iacr.org/2022/1688.pdf [extrait le 2023-12-12] * sections 2.2 and 3 * | 8-10 | |

-----

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 10 septembre 2024 | Manet, Pascal |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

    ...........................................................................
& : membre de la même famille, document correspondant

EPO FORM 1503 03.82 (P04C02)

page 2 de 2

# EP 4 456 477 A1

## ANNEXE AU RAPPORT DE RECHERCHE EUROPEENNE
## RELATIF A LA DEMANDE DE BREVET EUROPEEN NO.

EP 24 16 8685

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-09-2024

| Document brevet cité au rapport de recherche | Date de publication | Membre(s) de la famille de brevet(s) | | Date de publication |
|---|---|---|---|---|
| US 2022131698 A1 | 28-04-2022 | CN | 116348873 A | 27-06-2023 |
| | | EP | 4232923 A1 | 30-08-2023 |
| | | US | 2022131698 A1 | 28-04-2022 |
| | | US | 2023120343 A1 | 20-04-2023 |
| | | US | 2024048390 A1 | 08-02-2024 |
| | | WO | 2022086647 A1 | 28-04-2022 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3123130 A1

**Littérature non-brevet citée dans la description**

- **SAM KIM ; KEVIN LEWI ; AVRADIP MANDAL ; HART MONTGOMERY ; ARNAB ROY ; DAVID J. WU SCN.** *Function-Hiding Inner Product Encryption is Practical,* vol. 2018, 544-562

- **ALBERTO IBARRONDO ; HERVÉ CHABANNE ; MELEK ÖNEN.** *Funshade: Functional Secret Sharing for Two-Party Secure Thresholded Distance Evaluation,* https://eprint.iacr.org/2022/1688